Europäisches Patentamt

European Patent Office

Office européen des brevets

(11) Veröffentlichungsnummer : **0 084 666**
**B1**

(12) EUROPÄISCHE PATENTSCHRIFT

(45) Veröffentlichungstag der Patentschrift :
05.03.86

(21) Anmeldenummer : 82111927.8

(22) Anmeldetag : 23.12.82

(51) Int. Cl.⁴ : **B 07 B  1/46**, B 07 B  1/55,
G 01 N 15/02

(54) **Vorrichtung zur nassen Siebanalyse.**

(30) Priorität : 23.01.82 DE 3202064

(43) Veröffentlichungstag der Anmeldung :
03.08.83 Patentblatt 83/31

(45) Bekanntmachung des Hinweises auf die Patenterteilung : 05.03.86 Patentblatt 86/10

(84) Benannte Vertragsstaaten :
BE CH DE FR GB IT LI LU NL SE

(56) Entgegenhaltungen :
DE-A- 1 598 865
GB-A- 1 197 782
US-A- 2 734 631
US-A- 3 943 754
US-A- 4 116 824

(73) Patentinhaber : BASF Aktiengesellschaft
Carl-Bosch-Strasse 38
D-6700 Ludwigshafen (DE)

(72) Erfinder : Bouquet, Rolf
Moerlheimer Hauptstrasse 58
D-6740 Landau (DE)
Erfinder : Weber, Gerhard
Luitpoldstrasse 20
D-6737 Boehl-Iggelheim (DE)
Erfinder : Koob, Knut, Dr.
Lorscher Strasse 7
D-6704 Mutterstadt (DE)

## Beschreibung

Die Erfindung betrifft eine Vorrichtung zur nassen Siebanalyse gemäß Oberbegriff des Patentanspruchs 1. Eine derartige Vorrichtung geht aus der US-A-3 943 754 hervor.

Bei der Qualitätskontrolle pulverförmiger Produkte werden sowohl der Anteil von grobkörnigem Produkt als auch der Anteil von Fremdstoffen geprüft, indem diese durch Stofftrennung vom feinteiligen Material getrennt werden. Anhand des prozentualen Anteils des Grobkorns am Gesamtprodukt kann eine Aussage darüber getroffen werden, inwieweit das Produkt für eine störungsfreie Ausbringung durch Spritz- bzw. Sprüheinrichtungen geeignet ist. Grobanteile führen häufig zu Verstopfungen der Einrichtungen und auch zu ungleichmäßigem Produktaustrag.

Die Stofftrennung erfolgt durch Naßsiebung, indem eine definierte Menge einer Suspension bestimmter Konzentration des zu untersuchenden, in Wasser suspendierten pulverförmigen Produkts auf übereinander angeordnete Siebe mit immer kleiner werdender Maschenweite aufgegeben und für eine festgelegte Dauer mit Wasser nachgespült wird. Danach bleiben die gröberen Teilchen auf den einzelnen Sieben zurück und können dann durch Rückstandsanalysen in ihren Gewichtsanteilen bestimmt werden.

Das Nachspülen wurde bisher häufig manuell mit Hilfe von Handbrausen durchgeführt. Eine Reproduzierbarkeit und Vergleichbarkeit von Analysenergebnissen aus verschiedenen Laboratorien waren somit nicht gegeben, da die individuellen Arbeitsweisen der Bearbeiter, beispielsweise bezüglich des Wasserdrucks, der Wassermenge und der Dauer eines Spülvorgangs, die Siebergebnisse wesentlich beeinflussen. Ein zu hoher Wasserdruck kann leicht zur Aufspaltung von Agglomeraten führen, was unter Praxisbedingungen bei der Herstellung einer Suspension nicht erreicht wird. Das Gleiche kann durch lange Spülvorgänge eintreten, da nämlich die ständige Reibung von Agglomeraten auf der Oberfläche des Siebbodens ebenfalls zu deren Zerstörung führen kann. Die Bestimmung ihres tatsächlichen Anteils ist aber wegen ihrer oben genannten Störeinflüsse von Bedeutung. Daher muß die während der Stofftrennung auf das Produkt einwirkende Energie niedriger gehalten werden als bei der Herstellung einer Suspension in der Praxis.

Aus der Patentschrift US-A-3 943 754 ist auch eine Vorrichtung zur nassen Siebanalyse bekannt, bei der jedem Sieb eine aus einem feststehenden Zulaufrohr bestehende Verteileinrichtung zum Beaufschlagen der Siebe mit einer Spülflüssigkeit zugeordnet ist. Dabei wird eine pulsierende Flüssigkeitssäule erzeugt, um das zu analysierende Produkt auf die verschiedenen Siebe zu transportieren. Die Wasserverteilung auf der Produktoberfläche im Sieb ist jedoch wegen des feststehenden Zulaufrohrs ungleichmäßig.

Eine ähnliche Vorrichtung ist aus der GB-A-1 197 782 bekannt, wobei dort jedoch die Spülflüssigkeit nur durch eine einzige, dem oberen Sieb zugeordnete, zentrale Spüleinrichtung zugeführt wird.

Weitere zum Klassieren und Körnungsmessen geeignete Einrichtungen einfacher Art sind aus den Schriften US-A-2 734 631 und DE-A-1 598 865 bekannt. Für eine umfangreiche Siebanalyse sind sie jedoch nicht einsetzbar.

Es stellte sich daher die Aufgabe, eine Vorrichtung zur nassen Siebanalyse der eingangs beschriebenen Art zu entwickeln, mit deren Hilfe jedes Sieb mit einer Spülflüssigkeit gleichmäßig beaufschlagbar ist.

Diese Aufgabe wird gelöst durch die Merkmale des Kennzeichens des Patentanspruches 1. Vorteilhafte Ausgestaltungen sind den Ansprüchen 2 und 3 zur entnehmen. Sie ermöglicht eine Siebanalyse unter exakt einstellbaren äußeren Bedingungen, wie Wasserdruck, Wassermenge, Verteilungsgrad und Spülintensität, so daß die Analysenergebnisse reproduzierbar und vergleichbar sind.

Weitere Einzelheiten und Vorteile der erfindungsgemäßen Vorrichtung ergeben sich aus einem anhand der Zeichnung nachfolgend beschriebenen Ausführungsbeispiel.

Es zeigen

Figur 1 die Vorrichtung in perspektivischer und auseinandergezogener Darstellung

Figur 2 eine Meßapparatur zur Bestimmung des Gewichtsanteils der zurückgehaltenen Teilchen.

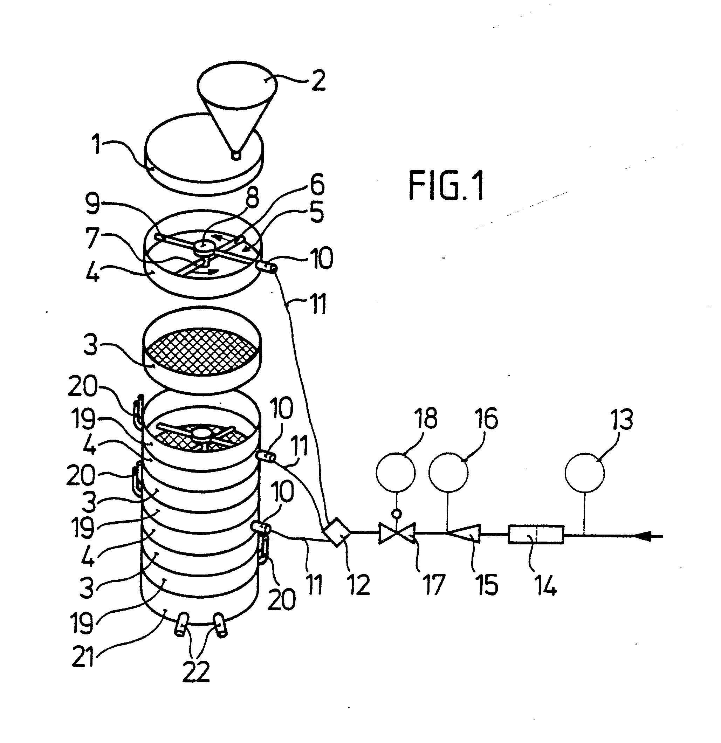

Wie in Fig. 1 schematisch wiedergegeben, besteht die Vorrichtung aus auf einer ebenen Unterlage aufeinander gestapelten Einsätzen. Der obere Einsatz umfaßt eine Abschlußplatte 1 mit einem aufgesetzten Trichter 2 als Einrichtung zum Aufgeben der zu untersuchenden Suspension auf die darunter folgenden, ebenfalls als Einsätze ausgebildeten Siebe 3, wobei der Trichter zum kontrollierten, kontinuierlichen Zufluß der Suspensionsflüssigkeit im unteren Auslauf mit einer Blende versehen ist. Zum Stapelfuß hin unterscheiden sich die Siebe durch kleiner werdende Maschenweiten entsprechend der Abstufung der anteilig zu bestimmenden Korngrößen. Die Anzahl der Siebe richtet sich nach der gewünschten Zahl der Korngrößenstufen.

Über jedem Sieb 3 ist ein Einsatz 4 angeordnet, der eine Verteilereinrichtung 5 zum gleichmäßigen Durchspülen der Siebe mit einer Spülflüssigkeit, gewöhnlich Wasser, aufnimmt. Sie besteht aus einem mit einer Vielzahl radialer Bohrungen 6 versehenen Verteilungsrohr 7, das in seiner Mitte an einem Verteilerkopf 8 horizontal drehbar gehalten ist. Die Anordnung der Bohrungen ist dabei so gewählt, daß durch den Rückstoß der daraus austretenden Spülflüssigkeit das Verteilungsrohr in Rotation versetzt wird. Der Verteilerkopf 8 ist an einem an der Einsatzwand befestigten Stützrohr 9 gehalten, durch das die Spülflüssigkeit zugeführt wird, und besteht aus einem mit dem Stützrohr fest verbundenen Hohlzylinder, an dem die Hohlwelle des Verteilungsrohrs 7 unter Zwischenlage einer Wellendichtung drehbar gehalten ist.

An Anschlußstutzen 10 der Stützrohre 9 sind die Verteileinrichtungen 5 über Schlauchleitungen 11 mit dem Verteiler 12 einer Flüssigkeitsdruckquelle verbunden. Dabei wird der Druck der Quelle, meßbar mit einem Manometer 13, nach einem Filter 14 durch ein Reduzierventil 15 auf den gewünschten Betriebsdruck gebracht und mit Hilfe eines weiteren Manometers 16 überwacht. Ein zwischen Verteiler 12 und Reduzierventil 15 eingefügtes Magnetventil 17 ermöglicht, die Spüldauer mit Hilfe einer Schaltuhr 18 zu steuern.

Es ist notwendig, nach jedem Sieb 3 einen Entlüftungseinsatz 19 vorzusehen, der seitlich mit Entlüftungsstutzen 20 ausgestattet ist.

Den unteren Abschluß der aufeinander gestapelten Einsätze bildet ein Auffangbehälter 21 mit Auslauföffnungen 22 für die durch die Siebe gespülte Suspension.

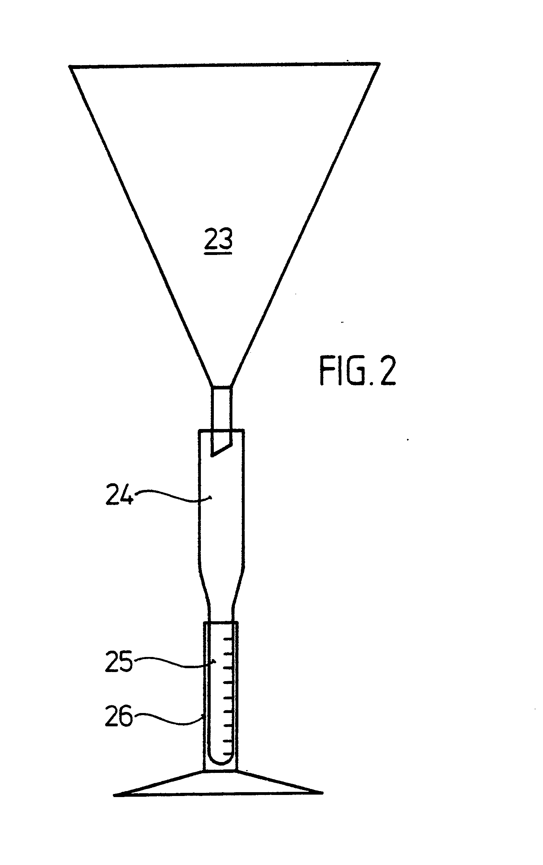

Durch den Aufbau mehrerer vorstehend beschriebener Vorrichtungen ist es möglich, in relativ kurzer Zeit eine Vielzahl von Siebanalysen unter exakter Einhaltung der analysenspezifischen Parameter parallel durchzuführen. Nach dem Aufgeben der zu untersuchenden Suspension auf die Siebe über den Trichter 2 läuft der Spülvorgang, beispielsweise mit Wasser, nach Betätigung der Schaltuhr 18 selbsttätig ab, nachdem die Verteilungsrohre 7 infolge des austretenden Wassers zu rotieren beginnen. Dabei entsteht, gesteuert über die Wassermenge und den Wasserdruck, ein gleichmäßiger Wasserfilm über den einzelnen Siebböden. Nach voreingestellter Zeit schließt die Schaltuhr das Magnetventil. Die Suspension ist vollständig über die Siebe abgelaufen, wobei die gröberen Teilchen auf den Sieben zurückgehalten worden sind. Deren Gewichtsanteil am gesamten suspendierten pulvrigen Produkt wird nun dadurch bestimmt, daß die Teilchen auf den einzelnen Sieben mittels eines leichten Wasserstrahls, beispielsweise aus einer Spritzflasche, jeweils über Trichter 23 von in Figur 2 gezeigten Meßapparaturen in deren Meßgläser 24 gespült werden, die in Standkolben 25 gehalten sind. Nach dem vollständigen Einspülen der Siebrückstände kommt es sehr rasch zu einer Sedimentation, so daß aufgrund vorher durchgeführter Eichmessungen die Gewichtsanteile an Eichmarken 26 direkt abgelesen werden können.

Derartige Meßapparaturen erlauben sehr schnell den direkten Vergleich von Korngrößenanteilen mehrerer Proben untereinander, sozusagen mit einem Blick.

**Patentansprüche**

1. Vorrichtung zur nassen Siebanalyse, bestehend aus mehreren übereinander angeordneten Sieben (3) mit immer kleiner werdender Maschenweite, einer Einrichtung (2) zum Aufgeben des in einer Flüssigkeit suspendierten pulvrigen Stoffes auf die Siebe, dessen anteilige Zusammensetzung nach Korngröße mit Hilfe der Siebe bestimmt werden soll, und einem Auffangbehälter (21) mit Auslauf (22) für die durch die Siebe gelaufene Flüssigkeit, wobei jedem Sieb (3) eine Verteileinrichtung (5) zum Beaufschlagen der Siebe mit einer Spülflüssigkeit zugeordnet ist, dadurch gekennzeichnet, daß zum gleichmäßigen Beaufschlagen der Siebe mit der Spülflüssigkeit die Verteileinrichtung ein an einem Verteilerkopf (8) in der Mitte drehbar gehaltenes Verteilungsrohr (7) ist, versehen mit einer Vielzahl radialer Bohrungen (6), durch deren entsprechende Anordnung der Rückstoß der aus diesen austretenden Spülflüssigkeit für den Rotationsantrieb des Verteilungsrohrs ausnutzbar ist, und daß die Verteileinrichtungen mit einer steuerbaren Flüssigkeitsquelle verbunden sind.

2. Vorrichtung nach Anspruch 1, dadurch gekennzeichnet, daß die Verteileinrichtungen (5) über ein Magnetventil (17) an die Flüssigkeitsdruckquelle angeschlossen sind, das durch eine Schaltuhr (18) betätigbar ist.

3. Vorrichtung nach Anspruch 1 und 2, dadurch gekennzeichnet, daß die Aufgabeeinrichtung (2) im unteren Auslauf mit einer Blende versehen ist, die einen kontrollierten, kontinuierlichen Zufluß der Suspensionsflüssigkeit ermöglicht.

**Claims**

1. A wet sieving apparatus for particle size analysis, comprising a plurality of superposed sieves (3) whose aperture sizes decrease progressively downwards, a device (2) for supplying onto the sieves the pulverulent material which is suspended in a liquid and whose particle size distribution is to be determined with the aid of the sieves, and a collecting vessel (21), having overflow means (22), for the liquid which has run through the sieves, a distributor (5) being allocated to each sieve (3) for the purpose of supplying a conveying liquid onto it, wherein, in order to uniformly supply the sieves with the conveying liquid, the distributor is a tube (7) which is rotatably mounted at the middle on a distributor head (8), and is provided with a large number of radial holes (6) which are arranged in such a way that the thrust produced by the conveying liquid leaving the said holes can be utilized to rotate the said tube, and the distributors are connected to a controllable source for supplying the liquid under pressure.

2. An apparatus as claimed in claim 1, wherein the distributors (5) are connected to the source for supplying the liquid under pressure via a magnetic valve (17) which can be actuated by a timer (18).

3. An apparatus as claimed in claims 1 and 2, wherein the supply device (2) is provided at its lower outlet end with an orifice plate which permits a controlled continous flow of the suspension.

**Revendications**

1. Installation pour l'analyse granulométrique humide, composée de plusieurs tamis (3) à mailles de largeur décroissante superposés, d'un dispositif (2) pour le versage sur les tamis d'une matière pulvérulente, dont la répartition granulométrique doit être déterminée à l'aide de ces tamis, en suspension dans un liquide et d'un réservoir récepteur (21) avec dégorgeoir (22) pour le liquide ayant traversé les tamis, chaque tamis étant pourvu d'un dispositif de distribution (5) pour l'amenée de liquide de rinçage sur les tamis, caractérisée en ce que, en vue d'une répartition uniforme du liquide de rinçage sur les tamis, le dispositif de distribution est constitué d'un tuyau de distribution (7), monté à rotation en son milieu sur une tête (8) et muni d'un grand nombre de forures radiales (6), disposées de façon à pouvoir exploiter la réaction du liquide de rinçage sortant pour provoquer la rotation du tuyau de distribution, les dispositifs de distribution étant reliés à une source de liquide réglable.

2. Installation suivant la revendication 1, caractérisée en ce que les dispositifs de distribution (5) sont reliés à la source de liquide sous pression par l'intermédiaire d'une électro-vanne commandée par un commutateur à temps.

3. Installation suivant la revendication 1 ou 2, caractérisée en ce que le dispositif d'alimentation (2) comprend, dans le dégorgeoir inférieur, un diaphragme assurant un débit continu réglable du liquide de suspension.

FIG.1

FIG.2